# EUROPEAN PATENT APPLICATION

(11) **EP 3 214 773 A1**
(43) Date of publication of application: **06.09.2017**
(21) Application number: 15855760.3
(22) Date of filing: 26.03.2015
(51) Int. Cl.: H04B 17/12

(54) **ANTENNA ARRAY COUPLING AND CALIBRATING NETWORK DEVICE AND CALIBRATING METHOD, AND STORAGE MEDIUM**

(30) Priority: 28.10.2014 CN 201410586594
(71) Applicant: ZTE Corporation, Shenzhen, Guangdong 518057 (CN)
(72) Inventor: ZHOU, Hong, Shenzhen Guangdong 518057 (CN); MAO, Yindian, Shenzhen Guangdong 518057 (CN); SHEN, Nan, Shenzhen Guangdong 518057 (CN); TIAN, Zhiji, Shenzhen Guangdong 518057 (CN); WU, Jianjun, Shenzhen Guangdong 518057 (CN)
(74) Representative: Lavoix
(86) International application number: PCT/CN2015/075139
(87) International publication number: WO 2016/065830

(57) **Abstract**

Disclosed is an antenna array coupling and calibrating network device. The device includes a dielectric plate, a coupling and calibrating network, an antenna array, first radio frequency connectors and a second radio frequency connector. The coupling and calibrating network is provided on one surface of the dielectric plate and the antenna array is provided on the other surface of the dielectric plate. Through holes are provided in the dielectric plate. The antenna array is connected with the coupling and calibrating network through the through holes. An intermediate layer of the dielectric plate serves as both a ground layer and a metal reflecting plate. The first radio frequency connector and the second radio frequency connector are provided on the dielectric plate, and are connected with the coupling and calibrating network respectively. The disclosure further discloses a calibrating method for an antenna array coupling and calibrating network and a storage medium.

## Description

### TECHNICAL FIELD

The disclosure relates to an antenna technology for a wireless communication system, and more particularly to an antenna array coupling and calibrating network device, a calibrating method and a storage medium.

### BACKGROUND

In a present cellular system, an increasing requirement of a user on wireless data rate causes a finite bandwidth to be shared by neighbouring cells. Consequent inter-cell interference is a main limiting factor for data transmission rate and quality of service. Interference of a cell to a user located on an edge of the cell is particularly serious. Many wireless service providers have been trying to improve quality of service for a user on an edge of a cell. In these attempts, it is the most potential solution that more degrees of freedom are provided by a multi-antenna technology to alleviate service performance decline for a user on an edge of a cell. In addition, in conventional 4-antenna and 8-antenna high-power base station systems, it is greatly difficult to design transceiver link modules of the base station systems. If high power is equally allocated to more massive antennas, such as 16 antennas and 64 antennas, power of a single antenna may be greatly reduced. Difficulties in designing transceiver links of the base station system may be greatly reduced. Therefore, massive intelligent antenna communication will become a development trend. Implementation of a coupling and calibrating network, as one of key parts of massive intelligent antennas, not only directly influences a beamforming effect of the massive intelligent antennas, but also indirectly influences a module structure design of a base station system.

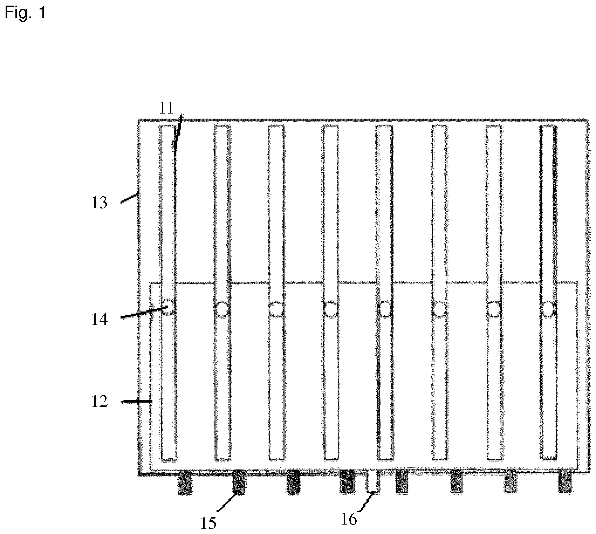

As shown in Fig. 1, a coupling and calibrating network device for a linearly arranged intelligent antenna array is provided in the Chinese patent CN2755871 Y The device includes N antenna array elements, N couplers and a plurality of power dividers/combiners (N≥2). The N antenna array elements (11) are linearly arranged into a linear antenna array. Each of the couplers is a microstrip orientational coupler, and consists of two close metal parallel microstrips. The N microstrip orientational couplers and the plurality of power dividers/combiners are manufactured on a coupling and calibrating network circuit board (12). The circuit board (12) is arranged behind a radiation direction of the linear antenna array. The N microstrip orientational couplers on the coupling and calibrating network circuit board are distributed in one-to-one correspondence with the N antenna array elements. A metal reflecting plate (13) is arranged behind the coupling and calibrating network circuit board, so that orientational coverage of the linear antenna array is implemented. In addition, the device further includes radio frequency connectors 14 for a coupling and calibrating network and the antenna array elements, eight antenna array input/output connectors 15 and one calibrating port input/output connector 16. In the patent, the antenna array, the coupling and calibrating network and the reflecting plate are single plates respectively and are not integrated on the same dielectric plate, which is unfavourable for integration of a base station system. The antenna array input/output connectors and the calibrating port input/output connector are connected with the base station system by leading out the radio frequency connectors from an edge of the coupling and calibrating network or by directly welding cables, which inevitably requires a number of the radio frequency connectors or the welding cables for a massive antenna array. As such, it becomes messy and tedious and also unfavourable for miniaturization and production of the base station system.

As shown in Fig. 2, the Chinese patent CN103746193A discloses an intelligent antenna and a calibrating device thereof. The intelligent antenna includes a reflecting plate (21), vibrators (22), an end cover (23) and a mounting plate (24) for connecting the reflecting plate (21) with the end cover (23). The intelligent antenna further includes the calibrating device. The calibrating device includes a dielectric plate (25), multiple connectors (26) and a calibrating network (27). The calibrating network (27) is printed on a surface of the dielectric plate, and includes a power allocation network formed by multiple power allocators and multiple orientational couplers. Any dividing port of the power allocation network is connected with an orientational coupler. Inner cores of the connectors are directly connected with a combiner port of the power allocation network or signal input ports of the orientational couplers. Each of the connectors corresponds to a port. The calibrating device is fixed on one side of the mounting plate. The mounting plate (24) is provided with at least one bent bar (241). The bent bar (241) passes through the calibrating device, and is fixed on the reflecting plate (21). In the patent, the vibrators are connected with the calibrating network through welding cables (28). There are numerous cables in a massive antenna array, which is unfavourable for production. The vibrators form a perpendicular device relationship with the calibrating network. The bent bar (241) is required to fix the device during assembling, which is unfavourable for subsequent production and causes a low system integration level.

Therefore, it is necessary to propose a new solution to reduce the size of the antenna, improve integration and miniaturization performance of a base station system, facilitate large-scale production and improve system reliability.

### SUMMARY

In order to solve the existing technical problems, embodiments of the disclosure are intended to provide an antenna array coupling and calibrating network device, a calibrating method and a storage medium.

The technical solutions of the embodiments of the disclosure are implemented as follows.

The embodiments of the disclosure provide an antenna array coupling and calibrating network device including a dielectric plate, a coupling and calibrating network, an antenna array, first radio frequency connectors and a second radio frequency connector. The coupling and calibrating network is provided on one surface of the dielectric plate. The antenna array is provided on the other surface of the dielectric plate. Through holes are provided in the dielectric plate, and the antenna array is connected with the coupling and calibrating network through the through holes. An intermediate layer of the dielectric plate serves as both a ground layer and a metal reflecting plate. The first radio frequency connectors and the second radio frequency connector are arranged on the dielectric plate, and connected with the coupling and calibrating network respectively.

The embodiments of the disclosure further provide a calibrating method for an antenna array coupling and calibrating network. This method is executed through an antenna array coupling and calibrating network device. The device includes a dielectric plate, a coupling and calibrating network, an antenna array, first radio frequency connectors and a second radio frequency connector. The coupling and calibrating network is provided on one surface of the dielectric plate. The antenna array is provided on the other surface of the dielectric plate. Through holes are provided in the dielectric plate, and the antenna array is connected with the coupling and calibrating network through the through holes. An intermediate layer of the dielectric plate serves as both a ground layer and a metal reflecting plate. The first radio frequency connectors and the second radio frequency connector are arranged on the dielectric plate, and connected with the coupling and calibrating network respectively. Radio frequency signals from sending channels of a base station system are inputted through the first radio frequency connectors respectively, and are subjected to a coupling effect of the coupling and calibrating network and combined into a path of calibrating signal. The calibrating signal is outputted to a calibrating link of the base station system through the second radio frequency connector.

The embodiments of the disclosure further provide a calibrating method for an antenna array coupling and calibrating network. The method is executed through an antenna array coupling and calibrating network device. The device includes a dielectric plate, a coupling and calibrating network, an antenna array, first radio frequency connectors and a second radio frequency connector. The coupling and calibrating network is provided on one surface of the dielectric plate. The antenna array is provided on the other surface of the dielectric plate. Through holes are provided in the dielectric plate, and the antenna array is connected with the coupling and calibrating network through the through holes. An intermediate layer of the dielectric plate serves as both a ground layer and a metal reflecting plate. The first radio frequency connectors and the second radio frequency connector are arranged on the dielectric plate, and are connected with the coupling and calibrating network respectively. A calibrating signal from a calibrating link of a base station system is inputted through the second radio frequency connector, is divided into multiple paths of signals and subjected to a coupling effect through the coupling and calibrating network. The multiple paths of signals are outputted to receiving channels of the base station system through the first radio frequency connectors respectively.

The embodiments of the disclosure further provide a computer storage medium having a computer program stored therein. The computer program is configured to execute the calibrating method for the antenna array coupling and calibrating network.

In the embodiments of the disclosure, the antenna array, the coupling and calibrating network and the metal reflecting plate are all integrated on the same dielectric plate. Antenna array elements are connected with the coupling and calibrating network via the through holes. As such, reliability is improved. A great number of radio frequency cables are avoided to be used. The size of the antenna may be reduced. Integration and miniaturization performance of the base station system may be improved. It is beneficial for implementation of a massive intelligent antenna array coupling and calibrating network device. Convenience is brought to production debugging and large-scale production, and higher applicability to popularization and development of a wireless communication system is achieved.

### BRIEF DESCRIPTION OF THE DRAWINGS

Fig. 1 is structure diagram illustrating a coupling and calibrating network device for a linearly arranged intelligent antenna array according to a related patent.

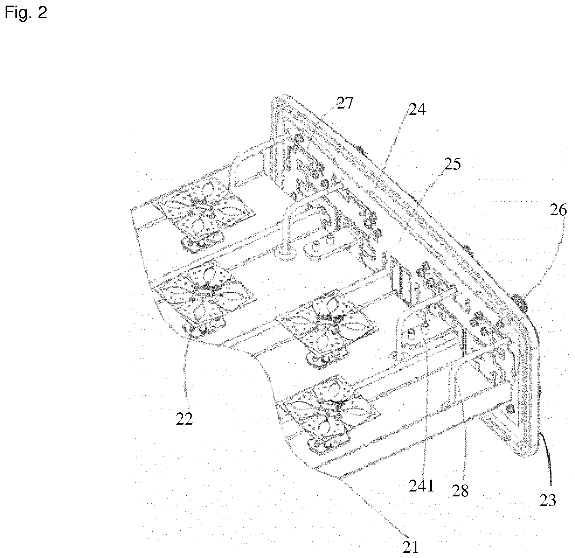

Fig. 2 is a structure diagram illustrating an intelligent antenna and a calibrating device thereof according to a related patent.
Fig. 3 is a three-dimensional structure side view illustrating an M=16-array-element antenna array coupling and calibrating network device according to an embodiment of the disclosure.
Fig. 4 is a top view illustrating an example of an antenna array with M=16 dual-polarized array elements according to an embodiment of the disclosure.
Fig. 5 is a top view illustrating another example of an antenna array with M=16 dual-polarized array elements according to an embodiment of the disclosure.
Fig. 6 is a structure diagram illustrating an M=16-array-element coupling and calibrating network according to an embodiment of the disclosure.
Fig. 7 is a structure diagram illustrating any coupling unit of a coupling and calibrating network according to an embodiment of the disclosure.

### DETAILED DESCRIPTION

In order to make the technical solutions and advantages of the disclosure clearer, the disclosure will be further described below in detail with examples with reference to the drawings.

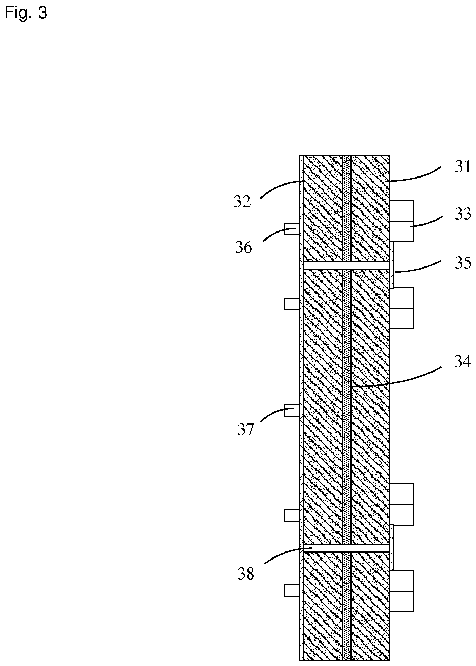

Fig. 3 is a three-dimensional structure side view illustrating an M=16-array-element antenna array coupling and calibrating network according to an embodiment of the disclosure. The antenna array coupling and calibrating network includes a dielectric plate 31, a coupling and calibrating network 32, an antenna array, sixteen first radio frequency connectors 36 and a second radio frequency connector 37. The antenna array and the coupling and calibrating network 32 are arranged on front and back surfaces of the dielectric plate 31, respectively. An intermediate layer of the dielectric plate 31 serves as both a ground layer and a metal reflecting plate 34. Through holes 38 are formed in the dielectric plate 31. The antenna array is connected with the coupling and calibrating network 32 through the through holes 38.

During a practical application, the dielectric plate 31 is a Printed Circuit Board (PCB). The antenna array is arranged on one surface, and the coupling and calibrating network 32 is printed on the other surface. The intermediate layer of the dielectric plate 31 serves as the ground layer of the coupling and calibrating network 32 and the antenna array, and also serves as the metal reflecting plate 34 of the antenna array to enhance orientational radiation of the antenna array.

The antenna array consists of sixteen antenna array elements 33 configured to receive and send signals. The sixteen antenna array elements 33 may be linearly arranged, annularly arranged or arranged in another irregular shape. And/or, the sixteen antenna array elements 33 may also be arranged at equal intervals or arranged at unequal intervals. And/or, the sixteen antenna array elements 33 may also adopt an orientational manner, a single-polarizational manner or a dual-polarizational manner. And/or, the orientational manner for the sixteen antenna array elements 33 may adopt any angle, such as 30° and 60° . And/or, the dual-polarizational manner for the sixteen antenna array elements 33 may adopt horizontal and perpendicular polarization or ±45° polarization.

The coupling and calibrating network 32 includes microstrip orientational couplers and dividers/combiners. The number of the microstrip orientational couplers is the same as the number of the antenna array elements. They correspond one to one. Each of antenna array elements 33 is connected with a corresponding microstrip orientational coupler on the coupling and calibrating network 32 via a through hole 38 after implementing parallel feeding in forms of microstrip lines 35 and the like. As such, the antenna array and the coupling and calibrating network may be arranged on the same dielectric plate. Adoption of a cable welding manner unfavourable for production may also be avoided.

A downlink calibrating work link flow of the abovementioned device is as follows. Sixteen paths of radio frequency signals from sending channels of a base station system are inputted through the sixteen first radio frequency connectors 36 respectively, and are outputted to a calibrating link of the base station system for calibration through the second radio frequency connector 37 after being coupled through the coupling and calibrating network 32 and combined into a path of calibrating signal in a manner of "equal differential loss and equal phase shift".

An uplink calibrating work link flow of the device is as follows. A calibrating signal from the calibrating link of the base station system is inputted through the second radio frequency connector 37, and is divided into sixteen paths of signals in the manner of "equal differential loss and equal phase shift" and subjected to a coupling effect through the coupling and calibrating network 32. The sixteen paths of signals are outputted to receiving channels of the base station system through the sixteen first radio frequency connectors 36 respectively.

The sixteen first radio frequency connectors 36 and the second radio frequency connector 37 are arranged in a non-edge extending area in the dielectric plate 31, which is favourable for structure miniaturization and integration. Any other reliable connecting manner with a similar function may be used, and will not be elaborated. The first radio frequency connectors 36 are configured to input or output the radio frequency signals. The second radio frequency connector 37 is configured to input or output the calibrating signal. Radio frequency connectors with blind insertion, radial and axial floating characteristics may be adopted respectively to facilitate connection with the base station system.

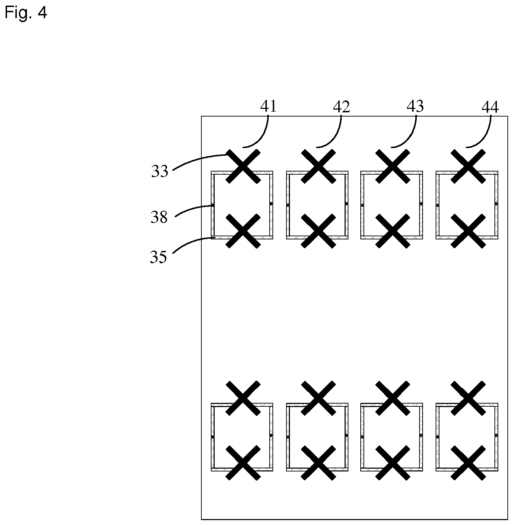

Fig. 4 is an arrangement diagram illustrating an example of an antenna array, and is a top view of an antenna array with M=16 dual-polarized array elements. For four columns of antenna array elements 41, 42, 43 and 44, each column of antenna array elements includes four antenna array elements 33 formed by dual-polarized vibrators. Antenna array elements 33 in each column of antenna array elements form +45° and -45 ° polarizational directions relative to a perpendicular direction or a horizontal direction, and are configured to send a signal and receive a signal. Upper and lower adjacent antenna array elements 33 in each column of antenna array elements implement parallel feeding in pairs by adopting structures such as the microstrip lines 35, and are connected with the microstrip orientational couplers through the through holes 38. Respective antenna array elements may be distributed and arranged at equal intervals in parallel, may also be interleaved at unequal intervals or may be distributed and arranged by adopting different combinations of these manners. The antenna array elements 33 may be metal vibrators, and may also be microstrip structures or layer structures. The antenna array elements 33 may adopt the dual-polarizational manner, and may also adopt the single-polarizational manner.

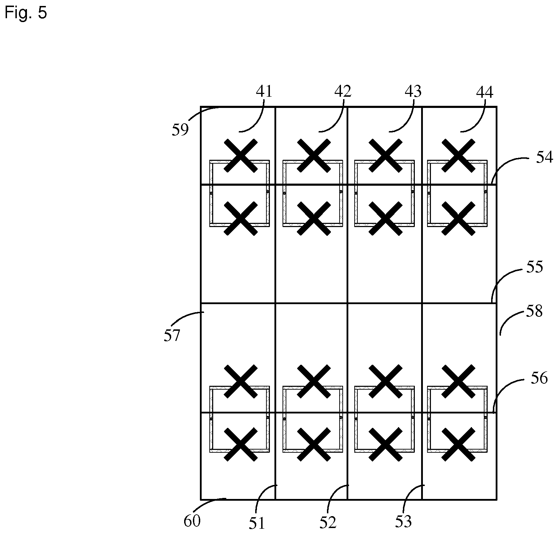

In order to optimize performance and enhance isolation between the array elements, as shown in Fig. 5, longitudinal metal partition plates 51, 52 and 53 may also be vertically arranged between every two adjacent columns of antenna array elements 41 and 42, 42 and 43 and 43 and 44 respectively. Conductive connection or capacitive coupling connection is adopted between the metal partition plates 51, 52 and 53 and the metal reflecting plate 34. In order to further optimize the performance, partition plates may also be arranged around an antenna array element as a unit. That is, metal partition plates 54, 55 and 56 perpendicularly intersected with the metal partition plates 51, 52 and 53 may be added. Meanwhile, metal side plates 57, 58, 59 and 60 may also be added around the antenna array elements. A manner for adding the metal partition plates and the surrounding side plates is not limited to a manner shown in Fig. 5. The metal partition plates may be independently designed, and may also be integrated on an antenna housing to improve strength of the antenna housing and enhance safety and stability of an antenna system. Another manner of adding small cover plates and the like above the antenna array elements may also be adopted to allow each of antenna array elements with an independent space, which will not be elaborated.

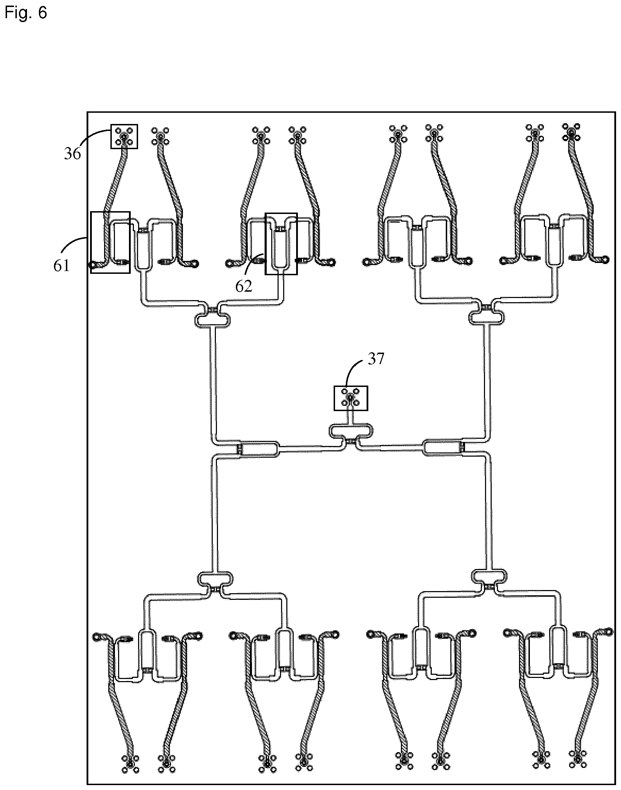

Fig. 6 is a top view illustrating an M=16-array-element coupling and calibrating network according to an embodiment of the disclosure. The coupling and calibrating network includes sixteen microstrip orientational coupling circuits 61 which are completely the same, fifteen 1:2 power dividers/combiners 62, sixteen first radio frequency connectors 36 and a second radio frequency connector 37 configured to input and output a calibrating signal. Every two adjacent microstrip orientational coupling circuits 61 are connected through one of 1:2 power dividers/combiners 62. One end of each of microstrip orientational coupling circuits 61 is connected with a first radio frequency connector 36 and the other end thereof is connected with the adjacent microstrip orientational coupling circuit through one of 1:2 power dividers/combiners 61. Two divider ports of each of 1:2 power combiners/combiners 62 are connected with two microstrip orientational coupling circuits 61 respectively. The combiner ports of the fifteen 1:2 power dividers/combiners, after being connected, are connected to the second radio frequency connector 37.

The number of sixteen microstrip orientational couplers is consistent with the number of antenna array elements, and two close parallel metal microstrip lines are adopted, so that extremely high product performance consistency is achieved. The sixteen microstrip orientational coupling circuits 61 form distribution in one-to-one correspondence with the sixteen antenna array elements on a circuit board of the coupling and calibrating network. Each of microstrip orientational couplers is connected with a first radio frequency connector to facilitate communication with a radio frequency transceiver of the base station system. The sixteen microstrip orientational couplers are completely the same, so as to facilitate production and debugging. The sixteen microstrip orientational couplers are electrically connected to the corresponding antenna array elements via through holes, so that amplitude and phase consistency of signals from the microstrip orientational couplers to the antenna array elements are better ensured in terms of performance. Meanwhile, structural simplicity and integration are ensured, reliability is high, and production is facilitated.

The number of the power dividers/combiners 62 is limited by the number of dividing paths/combining paths. The 1:2 power dividers/combiners are adopted in the embodiment shown in Fig. 6, so that fifteen power dividers/combiners 62 are required to implement dividing/combining of 16 paths of signals and finally combine a path of signal for sending to the second radio frequency connector 37. If 1:4 power dividers/combiners are adopted, after the sixteen antenna array elements and the sixteen microstrip orientational couplers are arranged, only five 1:4 power dividers/combiners are required to implement dividing/combining of the 16 paths of signals.

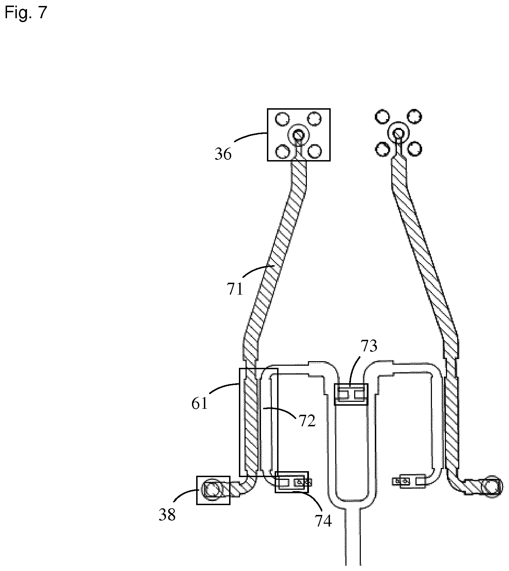

Fig. 7 is a schematic diagram illustrating any coupling unit in a coupling and calibrating network according to an embodiment of the disclosure. A coupling unit includes two microstrip orientational couplers 61 and a 1:2 power divider/combiner. Specifically, each of microstrip orientational couplers 61 includes two microstrips. One end of one microstrip 71 is connected with one antenna array element 33 through a through hole 38, and the other end thereof is connected with a radio frequency input end of a corresponding radio frequency transceiver of the base station system, i.e., the first radio frequency connector 36. One end of the other microstrip 72 is connected with a 50 Ω matched load 74 (may also be grounded), and the other end thereof is connected with a divider port of the 1:2 power divider/combiner 62. In Fig. 7, the reference sign 73 indicates an isolating resistor of the power divider/combiner 62.

The abovementioned embodiment is a 16-array-element antenna array coupling and calibrating network device. According to the same principle, a more massive antenna array coupling and calibrating network device with an array element number of 32, 64, 128 and the like may also be designed. The embodiments of the disclosure are particularly applicable to a massive antenna array.

For calibration of a wireless sending system of a base station, the embodiments of the disclosure further provide a calibrating method for an antenna array coupling and calibrating network, which is implemented through an M (M is an integer not smaller than 2, and for example, may be 16)-array-element antenna array coupling and calibrating network device. According to the method, M radio frequency signals from sending channels of a base station system are inputted through M first radio frequency connectors respectively, and are subjected to a coupling effect of the coupling and calibrating network and combined into a path of calibrating signal. The calibrating signal is outputted to a calibrating link of the base station system through a second radio frequency connector.

For calibration of a wireless receiving system of a base station, the embodiments of the disclosure further provide a calibrating method for an antenna array coupling and calibrating network, which is implemented through an M (M is an integer not smaller than 2, and for example, may be 16)-array-element antenna array coupling and calibrating network device. According to the method, a calibrating signal from a calibrating link of a base station system is inputted through a second radio frequency connector, is divided into multiple paths of signals and subjected to a coupling effect through the coupling and calibrating network. The multiple paths of signals are outputted to receiving channels of the base station system through first radio frequency connectors respectively.

Apparently, those skilled in the art should know that each module or each step of the disclosure may be implemented by a general computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices. The shown or described steps may be executed in sequences different from those described here in some circumstances, or may form respective integrated circuit modules. Alternatively, multiple modules or steps therein may form a single integrated circuit module for implementation. As a consequence, the disclosure is not limited to any specific hardware and software combination.

Correspondingly, the embodiments of the disclosure further provide a computer storage medium having a computer program stored, the computer program being configured to execute the calibrating method for the antenna array coupling and calibrating network according to the embodiments of the disclosure.

The above is only the preferred embodiment of the disclosure and not intended to limit the scope of protection of the disclosure.

### INDUSTRIAL APPLICABILITY

In respective embodiments of the disclosure, the antenna array, the coupling and calibrating network and the metal reflecting plate are all integrated on the same dielectric plate, and antenna array elements are connected with the coupling and calibrating network by adopting the through holes. Thus, reliability is improved. Use of a great number of radio frequency cables is avoided. The size of antenna may be reduced. Integration and miniaturization performance of the base station system may be improved. Implementation of a massive intelligent antenna array coupling and calibrating network device is facilitated. Convenience is brought to production debugging and large-scale production, and higher applicability to popularization and development of a wireless communication system is achieved.

## Claims

1. An antenna array coupling and calibrating network device, comprising: a dielectric plate, a coupling and calibrating network, an antenna array, first radio frequency connectors and a second radio frequency connector,
wherein the coupling and calibrating network is provided on one surface of the dielectric plate;
the antenna array is provided on the other surface of the dielectric plate;
through holes are provided in the dielectric plate and the antenna array is connected with the coupling and calibrating network through the through holes;
an intermediate layer of the dielectric plate serves as both a ground layer and a metal reflecting plate; and
the first radio frequency connectors and the second radio frequency connector are arranged on the dielectric plate, and are connected with the coupling and calibrating network respectively.

2. The device according to claim 1, wherein the coupling and calibrating network comprises dividers/combiners and M microstrip orientational couplers; the antenna array comprises M antenna array elements, and there are M first radio frequency connectors and one second frequency radio connector, and M is an integer not smaller than 2;
each of the antenna array elements is connected with a corresponding microstrip orientational coupler on the coupling and calibrating network via a through hole after parallel feeding; and
each of the first radio frequency connectors is connected with one of microstrip orientational couplers, and a combiner port of the dividers/combiners is connected with the second radio frequency connector.

3. The device according to claim 2, wherein the M first radio frequency connectors and the second radio frequency connector are arranged within the dielectric plate.

4. The device according to claim 2, wherein each of the microstrip orientational couplers comprises two microstrips, wherein one end of one microstrip is connected with a corresponding antenna array element through a through hole, and the other end is connected with a corresponding first radio frequency connector.

5. The device according to claim 2, wherein the M antenna array elements are linearly arranged, annularly arranged or arranged in another irregular shape.

6. The device according to claim 2, wherein the M antenna array elements are arranged at equal intervals or arranged at unequal intervals.

7. The device according to claim 2, wherein the M antenna array elements adopt an orientational manner, a single-polarizational manner or a dual-polarizational manner.

8. The device according to claim 2, wherein
a longitudinal metal partition plate is arranged between every two adjacent columns of antenna array elements in the antenna array; and/or,
a transverse metal partition plate is arranged between every two adjacent columns of antenna array elements in the antenna array; and/or,
metal side plates are arranged on a periphery of the antenna array.

9. The device according to claim 2, wherein the number of the dividers/combiners is determined according to the number of dividing paths and the number of the antenna array elements.

10. The device according to claim 1, wherein the dielectric plate is a Printed Circuit Board, PCB.

11. A calibrating method for an antenna array coupling and calibrating network,
wherein
the method is executed through an antenna array coupling and calibrating network device, the device comprising: a dielectric plate, a coupling and calibrating network, an antenna array, first radio frequency connectors and a second radio frequency connector,
wherein the coupling and calibrating network is provided on one surface of the dielectric plate, the antenna array is provided on the other surface of the dielectric plate, through holes are provided in the dielectric plate, and the antenna array is connected with the coupling and calibrating network through the through holes; an intermediate layer of the dielectric plate serves as both a ground layer and a metal reflecting plate; the first radio frequency connectors and the second radio frequency connector are arranged on the dielectric plate, and are connected with the coupling and calibrating network respectively; and
radio frequency signals from sending channels of a base station system are inputted through the first radio frequency connectors respectively, and are subjected to a coupling effect of the coupling and calibrating network and combined into a path of calibrating signal, and the calibrating signal is outputted to a calibrating link of the base station system through the second radio frequency connector.

12. A calibrating method for an antenna array coupling and calibrating network,
wherein
the method is executed through an antenna array coupling and calibrating network device, the device comprising: a dielectric plate, a coupling and calibrating network, an antenna array, first radio frequency connectors and a second radio frequency connector,
wherein the coupling and calibrating network is provided on one surface of the dielectric plate, the antenna array is provided on the other surface of the dielectric plate, through holes are provided in the dielectric plate, and the antenna array is connected with the coupling and calibrating network through the through holes; an intermediate layer of the dielectric plate serves as both a ground layer and a metal reflecting plate; the first radio frequency connectors and the second radio frequency connector are arranged on the dielectric plate, and are connected with the coupling and calibrating network respectively; and
a calibrating signal from a calibrating link of a base station system is inputted through the second radio frequency connector, is divided into multiple paths of signals and subjected to a coupling effect through the coupling and calibrating network, and the multiple paths of signals are outputted to receiving channels of the base station system through the first radio frequency connectors respectively.

13. A computer storage medium having a computer program stored therein, the computer program being configured to execute the calibrating method for the antenna array coupling and calibrating network according to claim 11 or 12.
